# EUROPEAN PATENT SPECIFICATION

(11) **EP 1 275 830 B1**
(45) Date of publication and mention of the grant of the patent: **18.04.2007**
(21) Application number: 02014446.5
(22) Date of filing: 28.06.2002
(51) Int. Cl.: F01P 3/18, B62K 11/00, F02B 61/02

(54) **Scooter type motorcycle**
Rollerartiges Motorrad
Motocyclette du type scooter

(30) Priority: 09.07.2001 JP 2001208302
(43) Date of publication of application: 15.01.2003
(73) Proprietor: YAMAHA HATSUDOKI KABUSHIKI KAISHA, Iwata-shi, Shizuoka-ken (JP)
(72) Inventor: Wakamatsu, Katsumitsu, Iwata-Shi, Shizuoka-ken (JP); Morita, Hideaki, Iwata-Shi, Shizuoka-ken (JP); Okada, Naoki, Iwata-Shi, Shizuoka-ken (JP)
(74) Representative: Grünecker, Kinkeldey, Stockmair & Schwanhäusser Anwaltssozietät

(56) References cited:
- EP-A- 1 088 750
- PATENT ABSTRACTS OF JAPAN vol. 1998, no. 01, 30 January 1998 (1998-01-30) & JP 9 249171 A (HONDA MOTOR CO LTD), 22 September 1997 (1997-09-22)
- PATENT ABSTRACTS OF JAPAN vol. 2000, no. 05, 14 September 2000 (2000-09-14) & JP 2000 062669 A (HONDA MOTOR CO LTD), 29 February 2000 (2000-02-29)
- PATENT ABSTRACTS OF JAPAN vol. 1996, no. 09, 30 September 1996 (1996-09-30) & JP 8 127377 A (SUZUKI MOTOR CORP), 21 May 1996 (1996-05-21)
- PATENT ABSTRACTS OF JAPAN vol. 2002, no. 03, 3 April 2002 (2002-04-03) & JP 2001 310784 A (HONDA MOTOR CO LTD), 6 November 2001 (2001-11-06)

## Description

The present invention relates to a scooter type motorcycle according to the preamble of independent claim 1. Such a scooter type motorcycle can be taken from the prior art document JP 2000-062669 A.

When a water-cooled engine is mounted on a scooter type of motorcycle, a cooling arrangement is required that is adapted to cool coolant water of the engine to below a specified temperature using a radiator. Such a cooling arrangement is conventionally made by placing the radiator in the front cover located over the front wheel, or in the lower front end part of the space under the footrest device so as to be exposed toward the front of the vehicle.

However, when the radiator is placed in the front cover in the conventional arrangement, the front part of the vehicle is liable to be large and must be provided with a hole for drawing in wind caused as the vehicle runs. So there are problems that design requirements such as making the front part compact with a simple appearance cannot be met and that increase in the length of coolant water passages leads to the increase in the vehicle weight.

The conventional arrangement above in which the radiator is placed in the lower front end part of the space under the footrest device, the vehicle frame must be designed to avoid interference with the radiator. As a result, the requirement of a shorter wheelbase cannot be met without sacrificing the foot placing space. Still another problem is that, since the radiator is placed just behind the front wheel, the vehicle-run-caused wind is obstructed with the front wheel and does not flow smoothly to the radiator.

It is an objective of the present invention to provide a scooter type motorcycle as indicated above having a compact structure and a low weight.

According to the present invention, said objective is solved by a scooter type motorcycle having the features of independent claim 1. Preferred embodiments are laid down in the dependent claims.

With said arrangement coolant water passages can be shortened.

According to a preferred embodiment, the low-height footrest device is provided between handlebars and a seat of the motorcycle, and said water-cooled engine is mounted behind the low-height footrest device, said radiator is placed between the footboard of the footrest device and said water-cooled engine, especially behind an underside of the footboard of the low-height footrest device.

According to a preferred embodiment, air introducing holes (22d) for guiding air flow occurring as the motorcycle runs to the radiator (20) are provided in right and left walls of an undercover (22) surrounding a space under the footboard (14).

Preferably, said motorcycle comprises a vehicle frame with a rising portion sloping up rearwardly from the footrest device and the radiator is placed behind said rising portion of the vehicle frame and along a sloping angle of said rising portion.

Further preferably, said vehicle frame comprises a large diameter main frame and a small diameter sub frame and said rising portion of the frame comprises a rising portion of the large diameter main frame and a rising portion of the small diameter sub frame and said radiator is mounted on said rising portions.

According to a preferred embodiment, said radiator is made in a shape oblong in a width direction of the motorcycle.

Preferably the radiator is made in a U-flow type in which water flows in from one side in a width direction of the motorcycle, turned back on the other side, and flows out of the other side; an air cleaner is placed in a position that is on the other side of the engine in the width direction of the motorcycle and that is behind the other side part of the radiator.

Further preferably, said air cleaner comprises a suction port and an air guide means is provided for preventing introduction of hot air after passing the radiator into the suction port of the air cleaner.

According to a preferred embodiment, a coolant water pump is placed on one side of the engine in the width direction of the motorcycle, the coolant water pump and a water jacket inlet of the engine are interconnected through a water supply hose, a water jacket outlet and a coolant water inlet formed on one side of the radiator are interconnected through a water passage hose and a coolant water outlet formed on one side of the radiator and the coolant water pump are interconnected through a return hose.

According to a preferred embodiment, an air vent hole is provided in a vehicle cover above the radiator.

Hereinafter, the present invention is illustrated and explained by means of an embodiment in reference to appended drawings. In the drawings, wherein:
FIG. 1 is a left side view of a scooter type of motorcycle constituted as an embodiment;
FIG. 2 is a plan view of the motorcycle;
FIG. 3 is an oblique view of the motorcycle;
FIG. 4 is an oblique view of a vehicle frame of the motorcycle;
FIG. 5 is a left side view of the vehicle frame;
FIG. 6 is a plan view of the vehicle frame;
FIG. 7 is a left side view of a cooling arrangement of the motorcycle;
FIG. 8 is a plan view of a cooling arrangement; and
FIG. 9 is an oblique view of a conventional vehicle frame.

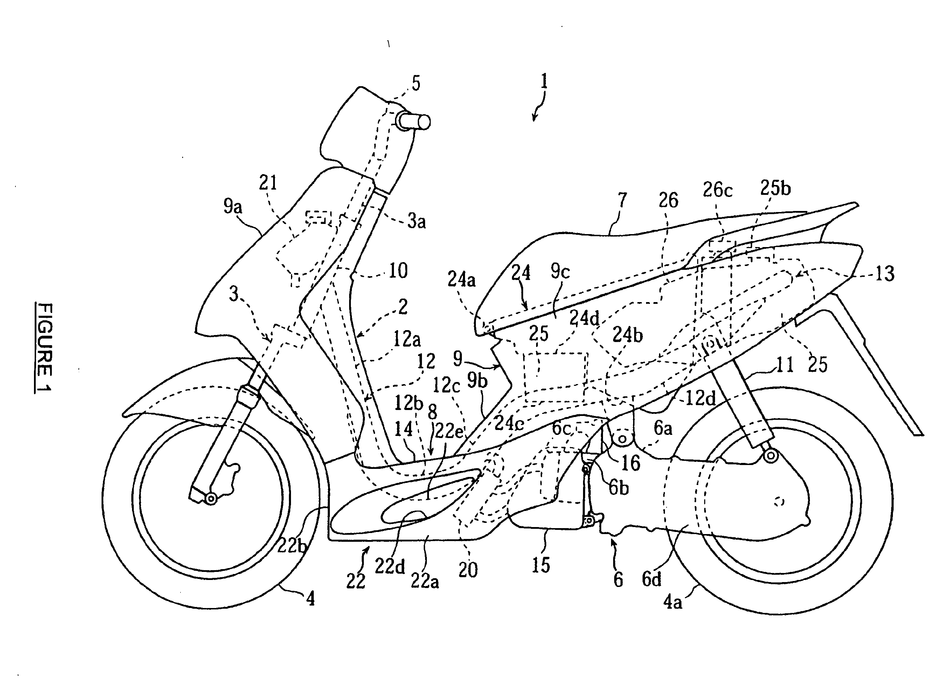

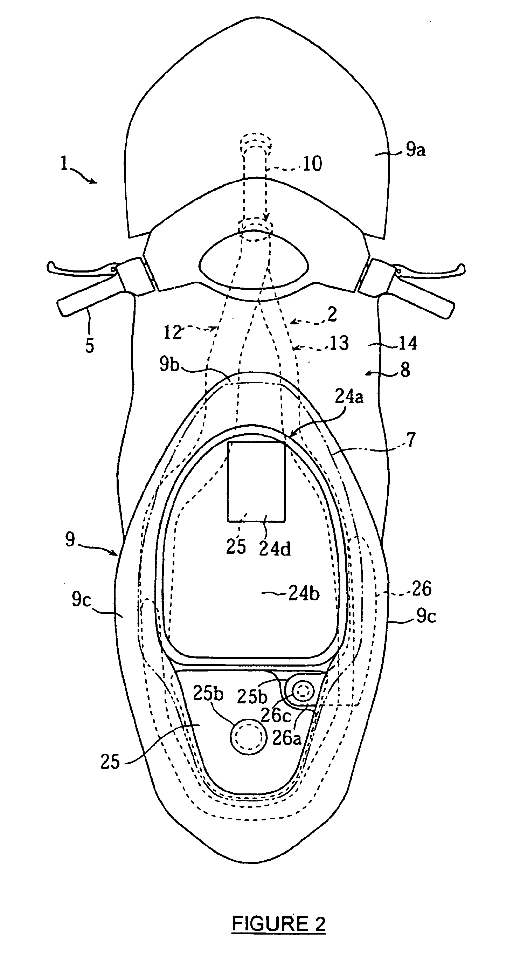

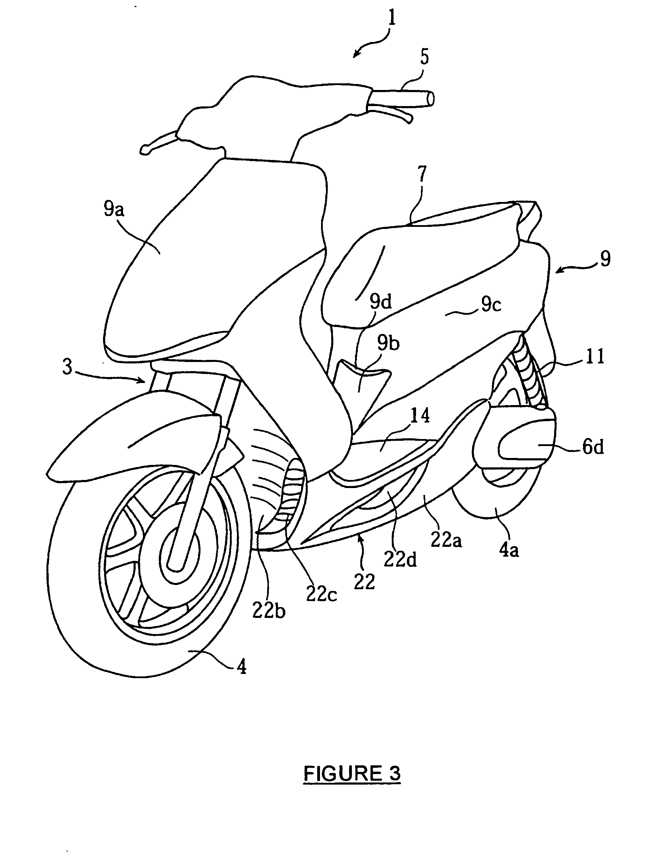

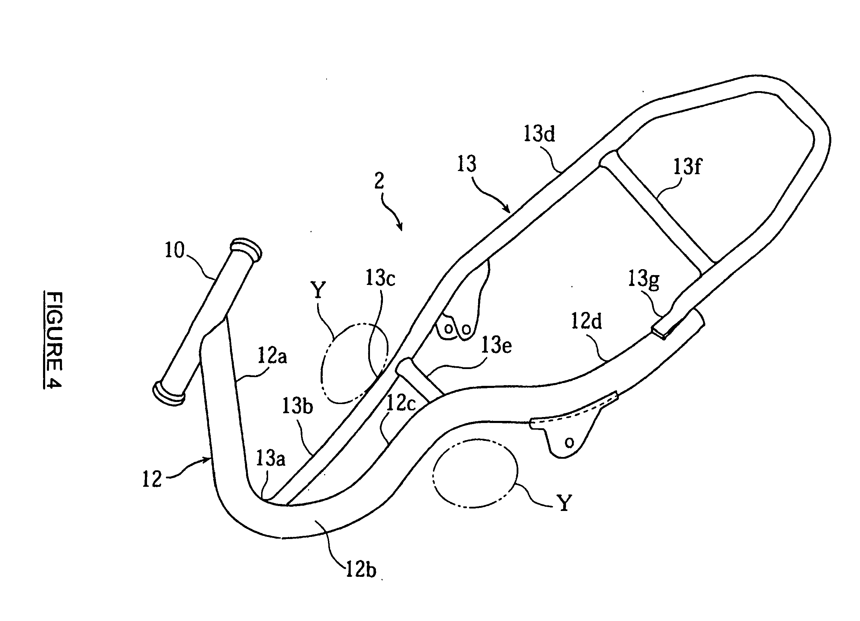

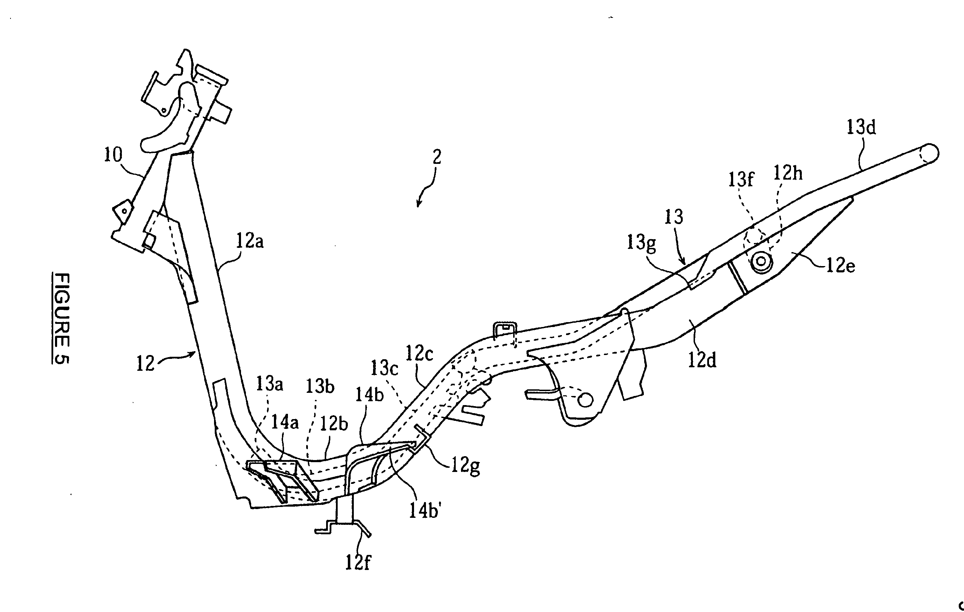

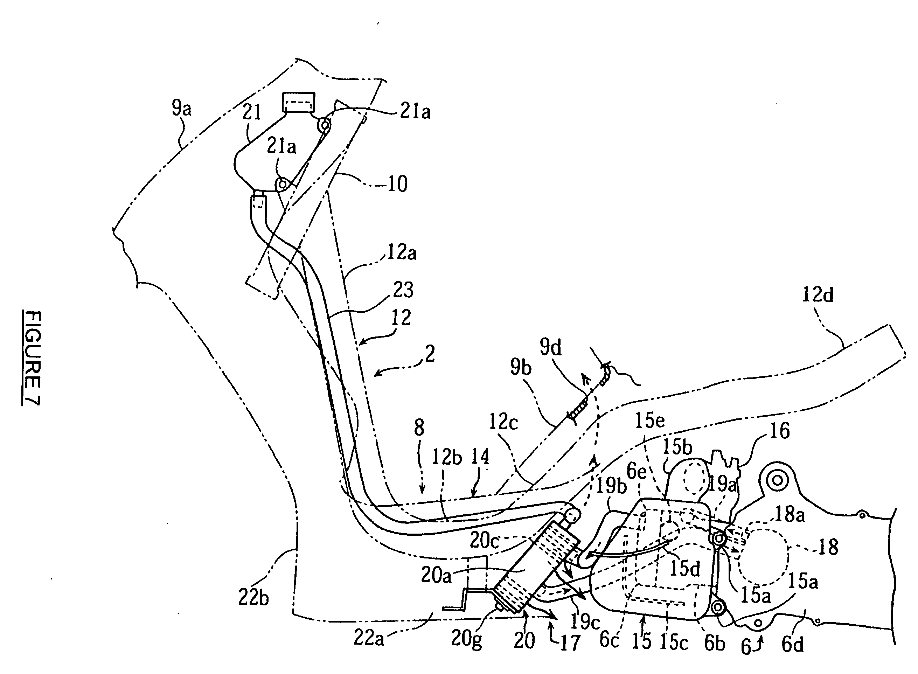

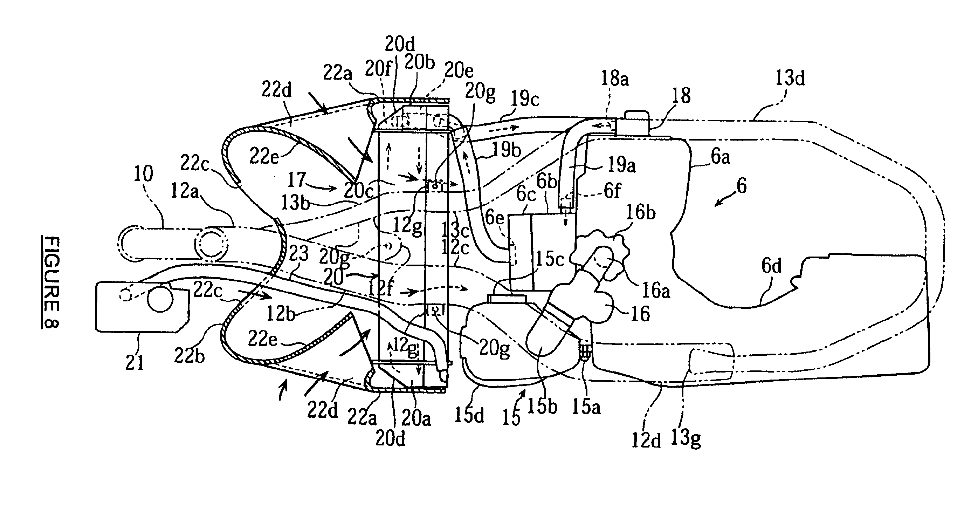

FIGs. 1 to 8 are drawings for explaining a scooter type of motorcycle in an embodiment, of which FIGs. 1 to 3 are a left side view, a plan view, and an oblique view as seen from left front of the motorcycle; FIGs. 4 to 6 are an oblique view, a left side view, and a plan view of the vehicle frame; and FIGs. 7 and 8 are a left side view and a plan view of the cooling arrangement. Incidentally, the terms front, rear, right, and left as used herein are meant as seen from a rider seated on the seat.

In the drawings are shown: a scooter type of motorcycle 1 to which the present embodiment is applied. The motorcycle is constituted as roughly described below. That is, the motorcycle 1 comprises a vehicle frame 2 with a head pipe 10 supporting a front fork 3, a front wheel 4 axially supported at the lower end of the front fork 3, and handlebars 5 attached to the upper end of the front fork 3. It also comprises an engine unit 6 pivoted for vertical swing to the approximately middle part with respect to the front-to-rear direction of the vehicle frame 2, a rear wheel 4a supported with the rear end part of the engine unit 6, and a seat 7 attached above the engine unit 6. A low-height footrest device 8 is formed between the handlebars 5 and the seat 7. A vehicle cover 9 surrounds the front fork 3, right and left sides of the footrest device 8, and side areas below the seat 7.

The vehicle frame 2 is of a so-called under-bone type made up of the head pipe 10 for supporting the steering shaft 3a of the front fork 3 for right-and-left free steering, a main pipe (main frame) 12 made of a single, large-diameter, round pipe extending from the head pipe 10 to a cushion supporting portion for supporting a cushion unit 11 for the rear wheel suspension, and a sub-pipe (sub-frame) 13 made of a single, small-diameter, round pipe extending from the right side surface of part of the main pipe 12 in front of the footrest portion 12b along the right side of the vehicle to the rear end of the vehicle, curving forward there and welded to the cushion supporting portion.

The main pipe 12 is made up of: a down pipe portion 12a weld-secured to the approximate middle of the length of the head pipe 10 located in the vehicle width center and extending obliquely down rearward in the vehicle width center, the footrest portion 12b extending from the lower end of the down pipe portion 12a approximately horizontally rearward nearly along the vehicle center line, a rising portion 12c extending continuously from the footrest portion 12b obliquely up rearward nearly along the vehicle center line, and a cushion support portion 12d extending continuously from the rising portion 12c while curving outward on one side in the vehicle width direction and extending again rearward to the cushion unit attachment portion. A support plate 12e for reinforcing the joint between the main pipe 12 and the sub-pipe 13 is secured to the rear end surface of the cushion support portion 12d and to the underside of the sub-pipe 13 and extends rearward.

The sub-pipe 13 is made up of: a sub-footrest portion 13b weld-secured at its front end 13a to the right side surface near the border between the down pipe portion 12a and the footrest portion 12b of the main pipe 12 and extending like the footrest portion 12b of the main pipe 12 near the vehicle center line nearly horizontally rearward, a sub-rising portion 13c extending continuously from the sub-footrest portion 13b sloping up rearward near the vehicle center line, and a surrounding portion 13d continuous from the sub-rising portion 13c, extending rearward while curving outward on the other side in the vehicle width direction, then forward so as to surround the rear part of the vehicle and weld-secured at its extension end 13g to the rear end upper surface of the cushion support portion 12d of the main pipe 12.

Since the small-diameter sub-pipe 13 is made including the surrounding portion 13d to surround the rear part of the vehicle with its front extension end 13g weld-secured to the main pipe 12, the rigidity of the vehicle frame as a whole can be increased without much increase in weight.

The main pipe 12 and the sub-pipe 13 are interconnected by welding at their rising portion 12c and sub-rising portion 13c through a front cross member 13e, and at the rear end of the cushion support portion 12d and the surrounding portion 13d through a rear cross pipe 13f. Since the main pipe 12 and the sub-pipe 13 are interconnected through the cross member and cross pipe by welding, this constitution also increases the frame rigidity. The rear cross pipe 13f is joined to part of the sub-pipe 13 near its connecting portion to the main pipe 12. Near the connection portion is provided a cushion bracket 12h. The rear cushion 11 is supported at its upper end portion with the cushion bracket 12h.

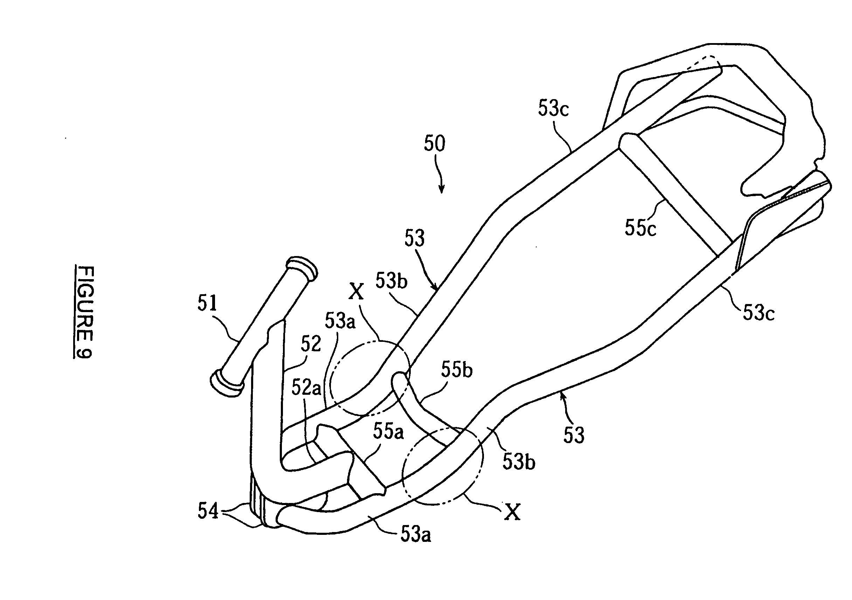

Here, the main pipe 12 is made with a diameter greater than that of a side frame 53 of a conventional vehicle frame 50 shown in FIG. 9. In contrast, the sub-pipe 13 is made to be smaller in diameter than the side frame 53. Therefore, the vehicle frame 2 in the present embodiment is asymmetric between its right and left sides as the main pipe 12 is greatly different in diameter from the sub-pipe 13. Moreover, the rear cross pipe 13f is designed to be smaller in diameter than the rear cross pipe 55c of the conventional vehicle frame 50.

The footrest device 8 is constituted with front and rear brackets 14a and 14b, of a rectangular cross section with one side open, welded to the footrest portion 12b of the main pipe 12 and the sub-footrest portion 13b of the sub-pipe 13, on which a footboard 14 is bolt-secured. The space below the footboard 14, on its right and left sides and the front side, is covered with part of the vehicle cover 9, namely with the side wall portions 22a and the front wall portion 22b of an undercover 22.

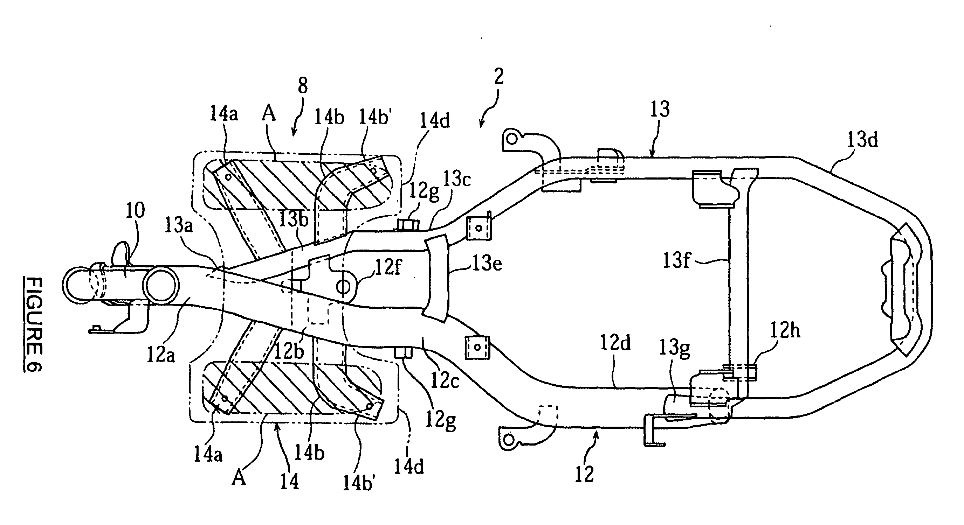

In reference to FIG. 6, since the footrest portion 12b of the main pipe 12 and the sub-footrest portion 13b of the sub-pipe 13, as well as rising portions of both of the pipes are located near the vehicle center line, parts of the footboard 14 of the footrest device 8 overhanging outward in the vehicle width directions from both of the footrest portions 12b and 13b are made to be effective foot placing spaces A, the hatched areas. The rear ends of the effective footrest spaces A are extended toward the rear of the vehicle.

The right and left front brackets 14a and the right and left rear brackets 14b for supporting the footboard 14 extend outward in the vehicle width directions along with the overhang of the footboard 14 in the vehicle width directions. The parts 14b' outer in the vehicle width directions of the rear brackets 14b are curved and extended rearward along with the right and left rearward extensions 14d of the footboard 14 to support the extensions 14d.

The vehicle frame 2 of the present embodiment comprises the single, thick main pipe 12 and the thin sub-pipe 13. The main pipe 12 is made up of the down pipe portion 12a passing near the vehicle width center, the footrest portion 12b continuously extending from the down pipe portion 12a to the rear end of the footrest device 8 nearly horizontally near the vehicle width center, and the rising portion 12c continuously extending obliquely rear upward near the vehicle width center from the footrest portion 12b. The sub-pipe 13 is made up of the sub-footrest portion 13b located near the vehicle width center and extending along the main frame 12. Therefore, footrest space is secured even when the wheelbase is made short without increasing weight while securing necessary rigidity of the vehicle frame.

In other words, in the case a single cushion unit 11 is employed with the conventional constitution shown in FIG. 9, cushion forces are equally received with right and left side frames 53, 53. Therefore, the right and left side frames 53, 53 must be made in relatively thick diameter and they must be interconnected through cross members 55a, 55b, and 55c of a large diameter. In contrast, since the present embodiment is arranged to receive the cushion forces with the single, thick main pipe 12, the joint with the sub-pipe 13 need not be made of a high strength. As a result, weight does not increase while securing the same vertical rigidity.

Since the constitution uses the thick main pipe 12 to which the thin sub-pipe 13 is joined by welding, the number of pipes to be welded is small and so the number of welds is also small, which results in simple welding process. Since the sub-pipe 13 is of the small diameter, a vacant space is produced between the sub-pipe 13 and a vehicle side cover 9c, and the space may be used to mount various components such as a lubricant oil tank 26 and others, which will be described later.

The constitution for securing torsion rigidity with the single thick main pipe 12 makes it possible to position the footrest portion 12b of the main pipe 12, the sub-footrest portion 13b of the sub pipe 13, and the rising portion of the main frame near the vehicle center line so that their mutual distances are small. As a result, even if the rising portions 12c and 13c are displaced forward in order to make the wheelbase shorter, surplus spaces Y are made on right and left outer sides of the rising portions 12c and 13c. The spaces Y can be utilized to extend the rear ends 14d of the footboard 14 rearward to increase the effective footrest spaces A. Incidentally, with the conventional constitution shown in FIG. 9, a problem is that the foot placing spaces are sacrificed when the areas X are shifted forward.

Since the right and left front brackets 14a and the right and left rear brackets 14b for supporting the footboard 14 are extended outward, and as to the right and left rear brackets 14b, since their outside ends 14b' are curved and extended rearward, they can support securely the footboard 14 although it is made in a shape with overhangs and rearward extended rear ends.

To describe roughly, the engine unit 6 is of a water-cooled, two-stroke cycle, single cylinder type, comprising a crankcase portion 6a, a cylinder 6b placed on the front wall of the crankcase portion 6a with the cylinder axis approximately horizontal, and a cylinder head 6c placed on the cylinder 6b, all tightened together, a transmission case 6d extending from the left wall of the crankcase portion 6a approximately horizontally rearward along the vehicle's left side and enclosing a V-belt type of CVT (continuously variable transmission).

An air cleaner 15 is placed in a left corner formed with the cylinder 6b, the cylinder head 6c, and the transmission case 6d of the engine unit 6. The air cleaner 15 comprises an element housed in a case of two piece, right-left-split type, and is removably attached to the front edge of the transmission case 6d by means of two bolts 15a.

A carburetor 16 is connected to an air outlet formed on the top surface of the air cleaner 15 through a joint 15b. The carburetor 16 is connected so as to communicate with the crank chamber of the crankcase portion 6a through a joint 16a and a reed valve 16b.

The engine unit 6 is provided with a cooling arrangement 17 for cooling engine coolant water down to appropriate temperatures by wind caused as the vehicle runs. The cooling arrangement 17 is constituted to supply coolant water with a coolant water pump 18 through a water supply hose 19a to the water jacket of the cylinder 6b. Coolant water coming out of the water jacket of the cylinder head 6c is passed through a water passage hose 19b to the radiator 20. Coolant water coming out of the radiator 20 is returned to the coolant water pump 18 through a return hose 19c. Although not shown, a thermostat valve that opens when coolant water temperature reaches or exceeds a specified value is provided near the water outlet 6e, of the cylinder head 6c, to which the water passage hose 19b is connected.

The coolant water pump 18 is provided on the right wall (on one side) of the crankcase portion 6a of the engine unit 6 and driven to rotate with the crankshaft. The water supply hose 19a is routed to extend from the outlet 18a provided on the upper side of the coolant water pump 18 along the front side wall of the crankcase portion 6a and is connected to the water supply port 6f of the cylinder 6b.

The radiator 20 is placed in a position behind the rear end of the footrest device 8 and in front of the engine unit 6. In side view of the vehicle, the radiator 20 is disposed behind the rising portions 12c and 13c at the same tilt angle as that of the rising portions 12c and 13c, sloping up rearward, of the vehicle frame 2. The radiator 20 is removably attached to brackets 12g, 12g on the frame side at two points in the upper surface with bolts 20g, and to a bracket 12f on the frame side at one point in the underside center, also removably with a bolt 20g.

The space over the radiator 20 is covered with the footboard 14 and the footrest device forming portion 9b of the vehicle cover 9. The radiator 20 is surrounded on its right, left, and front sides with the right wall 22a, left wall 22a, and front wall 22b of the undercover 22 as described above. The front wall 22b is provided with front openings 22c, 22c for introducing drive-caused wind in positions slightly displaced right and left from a position just behind the front wheel 4. An air vent hole 9d is formed through part of the vehicle cover 9 above the radiator 20. Furthermore, right and left openings (air introducing holes) 22d, 22d are formed through the right and left walls 22a. The right and left walls 22a are tapered off toward the front so that the drive-caused dynamic wind is more likely to flow in. The circumferential edges of the right and left openings 22d are made to curve and extend inward to be guide portions 22e so as to introduce the drive-caused wind efficiently to the radiator 20.

The radiator 20 is oblong in the vehicle width direction as seen from behind the vehicle and is of a so-called U-flow type comprising left and right headers 20a and 20b between which is interposed a core 20c comprising water tubes in multiple stages, with the water tubes having corrugated fins. The right header 20b is divided into upper and lower chambers 20e and 20f with a partition wall. The water tubes located on the upper half side is connected to the upper chamber 20e while the water tubes on the lower half side to the lower chamber 20f.

Here, each water tube is made of two flat plates put together, with the gap in between used as water passage. Since the radiator 20 is disposed with a tilt angle, the drive-caused wind is caused to flow obliquely rear downward. Therefore, the drive-caused wind flows toward the underside of the air cleaner 15. Here, the air cleaner 15 is located behind the left half of the radiator 20. A guide 15d is provided on the left side wall of the air cleaner 15 to permit the drive-caused wind to flow rearward while preventing the drive-caused wind from flowing upward. An L-shaped guide 15c is provided on the right side wall of the air cleaner 15 to surround the front and under sides of a suction port 15e, so as to prevent hot air after passing through the radiator from being drawn in through the suction port 15e.

The lower outside corners of the left and right headers 20a and 20b are formed in beveled shapes 20d to avoid reduction in the banking angle due to the presence of the radiator.

The downstream end of the water passage hose 19b is connected to the upper chamber 20e of the right header 20b, and the upstream end of the return hose 19c is connected to the lower chamber 20f. Therefore, coolant water flows from the upper chamber 20e of the right header 20b through the water tubes in the upper half of the core 20c to the left, makes a U-tum in the left header 20a, flows though the water tubes in the lower half to the right, and returns from the lower chamber 20f of the right header 20b to the coolant water pump 18.

When the amount of coolant water in the radiator 20 decreases due to evaporation or the like, coolant water is automatically supplied from a replenishment tank 21 disposed in front of the head pipe 10. The replenishment tank 21 is connected to the left header 20a of the radiator 20 through a replenishment hose 23 routed along the down pipe portion 12a and the footrest portion 12b of the main pipe 12. The replenishment tank 21 is removably attached to the head pipe 10 by means of bolts 21 a. The replenishment tank 21 is surrounded with part of the vehicle cover 9, the front cover 9a.

Since the present embodiment is arranged with the radiator 20 disposed near the underside rear end of the footboard 14 of the footrest device 8, the distance to the engine is the shortest. As a result, water passages such as the water passage hose 19b and the return hose 19c are made short, so the amount of water in those hoses and its weight are reduced accordingly.

If the radiator were disposed near the underside front end of the footboard, it would be necessary to form the frame so as to avoid interference with the radiator. As a result, the footrest space would be restricted. In the present embodiment, however, since the radiator is disposed near the underside rear end of the footboard 14, there is no need of changing the frame, and so the footrest space is not restricted by the positioning of the radiator.

Since the right and left openings 22d for introducing drive-caused wind to the radiator 20 are formed through the right and left side walls 22a of the undercover 22 surrounding the underside space of the footboard 14 and since the guides 22e are formed, sufficient amount of drive-caused wind may be drawn to the radiator 20 although the radiator is placed deep under behind the footboard 14. In other words, since the radiator 20 is positioned near the underside rear end of the footboard 14 and the right and left openings 22d are formed through the right and left side walls 22a of the undercover 22 which is relatively long in the front-to-rear direction, the shape of the right and left walls 22a can be freely designed and the shape of wind introducing passages for introducing the drive-caused wind to the openings 22d can be designed to increase the efficiency of introducing the drive-caused wind. As a result, the drive-caused wind is securely introduced to the radiator in spite of the fact that the radiator 20 is placed in the deep position, the position near the underside rear part of the footrest portion.

Since the radiator 20 is made in a shape oblong in the vehicle width direction and is disposed at the same tilt angle as that of the rising portions 12c and 13c of the vehicle frame 2 behind them, the radiator 20 having a sufficient radiation area may be disposed without difficulty in the narrow space between the vehicle frame 2 and the engine. Problems such as that the footboard 14 is in a high position due to the layout of the radiator 20 and that the angle of the rising portions 12c and 13c of the vehicle frame 2 is steep can be avoided. Moreover, road clearance is secured.

Since the radiator 20 is placed with a tilt angle, the air on the tilted underside of the radiator 20 tends to heat up as it absorbs the heat of the radiator 20 and the heated air flows up to be discharged through the air vent hole 9d formed through part of the vehicle cover 9 above the radiator when the vehicle is standing at a traffic light, and so the cooling effect of the radiator 20 is provided also when the vehicle is standing.

The radiator 20 is made in the U-flow type in which the coolant water pump 18 is placed on one side, right side, of the engine, and the coolant water pump 18 is connected to the water jacket of the engine, the water jacket is connected to the radiator 20, and the radiator 20 is connected to the coolant water pump 18 through the hoses 19a, 19b, and 19c on the same side, right side, where the coolant water pump 18 is located. Therefore, the space for disposing the air cleaner 15 is secured on the left side (the other side) of the engine behind the left side portion of the radiator 20, and so the engine size is prevented from increasing.

The area below the seat 7 is surrounded with part of the vehicle cover 9, the side cover 9c. In the side cover 9c is disposed an article holding box 24 made of formed plastic. The seat 7 is pivoted for vertical swing about a hinge 24a provided at the front edge of the article holding box 24 so as to close or open the top end opening of the article holding box 24.

The bottom portion 24b of the article holding box 24 is located in the area surrounded with the cushion support portion 12d of the main pipe 12, the surrounding portion 13d of the sub-pipe 13, and the front and rear cross pipes 13e and 13f. The bottom portion 24b is sink-formed to be a battery holding portion 24c in which a battery 25 is held. The top opening of the battery holding portion 24c may be closed or opened with a lid 24d.

A fuel tank 25 made of plastic is mounted behind the article holding box 24 so as to be surrounded with the surrounding portion 13d of the sub-pipe 13. The lubricant oil tank 26 made of plastic is mounted by utilizing the space between the right side wall of the article holding box 24 and the side cover 9c. The lubricant oil tank 26 is of a generally flattened shape formed to match the space between the right side wall of the article holding box 24 and the side cover 9c while avoiding interference with the side pipe 13. The lubricant oil tank 26 has at its rear upper part a replenishing portion 26a formed to extend inward in the vehicle width direction. The replenishing portion 26a is located over a sunk-stepped portion 25a formed in the top right front corner of the fuel tank 25. The reference numerals 26c and 25b denote caps, for closing and opening the filler inlets, to be exposed outside when the seat 7 is swung up open.

As described above, since the lubricant oil tank 26 is placed in the space between the article holding box 24 and the side cover 9c and only its replenishing portion 26a is placed over the sunk-stepped portion 25a of the fuel tank 25, the lubricant oil tank 26 is placed by utilizing the narrow space between the article holding box 24 and the side cover 9c, and replenishing work requires no special steps. Here, while the lubricant oil tank 26 is designed in a shape that can avoid interference with the sub-pipe 13, the problem of reduced capacity of the lubricant oil tank 26 is alleviated because the diameter of the sub-pipe 13 is small.

The embodiment described above provide a cooling arrangement for a scooter type of motorcycle that makes it possible to avoid increase in weight by shortening coolant water passages, to shorten the wheelbase while securing the footrest space, and to introduce sufficient amount of vehicle-drive-caused air flow to the radiator. Accordingly, it is provided a cooling arrangement 17 of a scooter type motorcycle using a radiator 20 for cooling coolant water of a water-cooled engine 6, with a low-height footrest device 8 provided between handlebars 5 and a seat 7, and with the water-cooled engine 6 mounted behind the footrest device 8, in which the radiator 20 is placed behind the underside of the footboard 14 of the footrest device 8, and air introducing holes 22d for guiding vehicle-drive-caused air flow to the radiator 20 are provided in right and left walls of an undercover 22 surrounding the space under the footboard 14.

With the cooling arrangement of the scooter type of motor cycle as mentioned above, since the radiator is placed behind the underside of the footboard of the footrest device, the distance from the radiator to the engine is the shortest so as to make the coolant water passages short and to avoid the increase in weight. The footrest space is not restricted with the layout of the radiator.

Since the air introducing holes for guiding the drive-caused wind to the radiator are provided in right and left walls of an undercover surrounding the space under the footboard, it is possible to draw sufficient amount of wind to the radiator. That is to say, since the radiator is placed in the rear part of the space under the footboard, and the air introducing holes are provided in the right and left walls of the undercover relatively long in the front to rear direction, the air introducing passages for drawing drive-caused wind to the air introducing holes may be formed in shapes that can improve wind introduction efficiency by setting the shapes of the right and left walls at will. As a result, drive-caused wind may be securely introduced to the radiator although the radiator is placed deep in the space behind the underside of the footrest device.

The radiator is made in a shape oblong in the vehicle width direction and is placed behind a rising portion, sloping up rearward from the footrest device part, of a vehicle frame, along the sloping angle of the rising portion.

Since the radiator is made in a shape oblong in the vehicle width direction and is placed behind the rising portion of the vehicle frame along the sloping angle of the rising portion, the radiator having sufficient radiation area can be placed in the narrow space between the vehicle frame and the engine without any difficulty. Therefore, problems of a high footboard, a steep slope angle of the rising portion of the vehicle frame, and a small road clearance due to the radiator layout are avoided.

Moreover, since the radiator is placed in a tilted attitude, the air on the sloped underside of the radiator tends to heat up as it absorbs the heat of the radiator when the vehicle is standing while waiting for a traffic light and the heated air flows up, cooling effect is provided also when the vehicle is standing.

The radiator is made in a U-flow type in which water flows in from one side in the vehicle width direction, turned back on the other side, and flows out from the other side, an air cleaner is placed in a position that is on the other side in the vehicle width direction of the engine and that is behind the other side part of the radiator, a coolant water pump is placed on one side in the vehicle width direction of the engine, the coolant water pump and a water jacket inlet are interconnected through a water supply hose, a water jacket outlet and a coolant water inlet formed on one side of the radiator are interconnected through a water passage hose, and a coolant water outlet formed on one side of the radiator and the coolant water pump are interconnected through a return hose.

The radiator is made in a U-flow type, and the coolant water pump is placed on one side in the vehicle width direction of the engine. The coolant water pump is connected to the water jacket of the engine, the water jacket is connected to the radiator, and the radiator is connected to the coolant water pump through hoses on one side in the vehicle width direction. Therefore, a space is secured for placing the air cleaner in a position that is on the other side in the vehicle width direction of the engine and that is behind part of the radiator on the other side in the vehicle width direction, and so the engine size is prevented from increasing.

The embodiment as described above teaches a scooter type motorcycle with a water-cooled engine 6, a low-height footrest device 8 having a footboard 14 and a cooling arrangement 17 having a radiator 20 for cooling coolant water of the water-cooled engine 6. Said radiator 20 is placed underneath the footboard 14 of the footrest device 8, i.e. said radiator 20is placed behind the footboard 14 of the footrest device 8 with regard to the longitudinal direction of the motorcycle. In particular, the low-height footrest device 8 is provided between handlebars 5 and a seat 7 of the motorcycle, and said water-cooled engine 6 is mounted behind the low-height footrest device 8. Said radiator 20 is placed between the footboard 14 of the footrest device 8 and said water-cooled engine 6, especially behind an underside of the footboard 14 of the low-height footrest device 8.

According to said embodiment, air introducing holes 22d for guiding air flow occurring as the motorcycle runs to the radiator 20 are provided in right and left walls of an undercover 22 surrounding a space under the footboard 14.

The embodiment as described above teaches scooter type motorcycle wherein said motorcycle comprises a vehicle frame 2 with a rising portion sloping up rearwardly from the footrest device 8 and the radiator 20 is placed behind said rising portion of the vehicle frame 2 and along a sloping angle of said rising portion. Said vehicle frame 2 comprises a large diameter main frame 12 and a small diameter sub frame 13. Said rising portion of the frame 2 comprises a rising portion 12c of the large diameter main frame 12 and a rising portion 13c of the small diameter sub frame 13 and said radiator 20 is mounted on said rising portions 12c, 13c.

According to the embodiment, said radiator 20 is made in a shape oblong in a width direction of the motorcycle.

According to said embodiment the radiator 20 is made in a U-flow type in which water flows in from one side in a width direction of the motorcycle, turned back on the other side, and flows out of the other side. An air cleaner 15 is placed in a position that is on the other side of the engine 6 in the width direction of the motorcycle and that is behind the other side part of the radiator 20. Said air cleaner 15 comprises a suction port 15e and an air guide means 15c is provided for preventing introduction of hot air after passing the radiator 20 into the suction port 15e of the air cleaner 15. A coolant water pump 18 is placed on one side of the engine 6 in the width direction of the motorcycle. The coolant water pump 18 and a water jacket inlet 6f of the engine 6 are interconnected through a water supply hose 19a. A water jacket outlet 6e and a coolant water inlet formed on one side of the radiator 20 are interconnected through a water passage hose 19b. A coolant water outlet formed on one side of the radiator 20 and the coolant water pump 18 are interconnected through a return hose 19c.

According to the embodiment, an air vent hole 9d is provided in a vehicle cover 9 above the radiator 20.

## Claims

1. Scooter type motorcycle with a water-cooled engine (6), a low-height footrest device (8) having a footboard (14) and a cooling arrangement (17) having a radiator (20) for cooling coolant water of the water-cooled engine (6), wherein said radiator (20) is placed underneath the footboard (14) of the footrest device (8), and an undercover (22) surrounding a space under the footboard (14) is provided with an air introducing hole (22d) for guiding air flow occurring as the motorcycle runs to the radiator (20), **characterized in that** said air introducing hole (22d) is provided in at least one of the side walls of the undercover (22).

2. Scooter type motorcycle according to claim 1, **characterized in that** the low-height footrest device (8) is provided between handlebars (5) and a seat (7) of the motorcycle, and said water-cooled engine (6) is mounted behind the low-height footrest device (8), said radiator (20) is placed between the footboard (14) of the footrest device (8) and said water-cooled engine (6), especially behind an underside of the footboard (14) of the low-height footrest device (8).

3. Scooter type motorcycle according to claim 1 or 2, **characterized in that** the left and the right side wall of the undercover (22) is provided with an air introducing hole (22d) respectively.

4. Scooter type motorcycle according to at least one of the claims 1 to 3, **characterized in that** said motorcycle comprises a vehicle frame (2) with a rising portion (12c,13c) sloping up rearwardly from the footrest device (8) and the radiator (20) is placed behind said rising portion (12c,13c) of the vehicle frame (2) and along a sloping angle of said rising portion (12c,13c).

5. Scooter type motorcycle according to claim 4, **characterized in that** said vehicle frame (2) comprises a large diameter main frame (12) and a small diameter sub frame (13) and said rising portion of the frame (2) comprises a rising portion (12c) of the large diameter main frame (12) and a rising portion (13c) of the small diameter sub frame (13) and said radiator (20) is mounted on said rising portions (12c,13c).

6. Scooter type motorcycle according to at least one of the claims 1 to 5, **characterized in that** said radiator (20) is made in a shape oblong in a width direction of the motorcycle.

7. Scooter type motorcycle according to at least one of the claims 1 to 6, **characterized in that** the radiator (20) is made in a U-flow type in which water flows in from one side in a width direction of the motorcycle, turned back on the other side, and flows out of the other side; an air cleaner (15) is placed in a position that is on the other side of the engine (6) in the width direction of the motorcycle and that is behind the other side part of the radiator (20).

8. Scooter type motorcycle according to claim 7, **characterized in that** said air cleaner (15) comprises a suction port (15e) and an air guide means (15c) is provided for preventing introduction of hot air after passing the radiator (20) into the suction port (15e) of the air cleaner (15).

9. Scooter type motorcycle according to at least one of the claims 1 to 8, **characterized in that** a coolant water pump (18) is placed on one side of the engine (6) in the width direction of the motorcycle, the coolant water pump (18) and a water jacket inlet (6f) of the engine (6) are interconnected through a water supply hose (19a), a water jacket outlet (6e) and a coolant water inlet formed on one side of the radiator (20) are interconnected through a water passage hose (19b) and a coolant water outlet formed on one side of the radiator (20) and the coolant water pump (18) are interconnected through a return hose (19c).

10. Scooter type motorcycle according to at least one of the claims 1 to 9, **characterized in that** an air vent hole (9d) is provided in a vehicle cover (9) above the radiator (20).

## Patentansprüche

1. Motorrad vom Roller- Typ mit einem wassergekühlten Motor (6), einer Tief - Hoch-Fußstützenvorrichtung (8) mit einem Fußbrett (14) und einer Kühlanordnung (17) mit einem Kühler (20) zum Kühlen von Kühlwasser des wassergekühlten Motors (6), wobei der Kühler (20) unterhalb des Fußbrettes (14) der Fußstützenvorrichtung (8) angeordnet ist, und eine Unterabdeckung (22), die einen Raum unter dem Fußbrett (14) umgibt, mit einer Luft- Einführungsöffnung (22d) zum Führen einer Luftströmung zu dem Kühler (20), die auftritt, wenn das Motorrad fährt, **dadurch gekennzeichnet, dass** die Lufteinführungsöffnung (22d) in zumindest einer der Seitenwände der Unterabdeckung (22) vorgesehen ist.

2. Motorrad vom Roller- Typ nach Anspruch 1, **dadurch gekennzeichnet, dass** die Tief - Hoch- Fußstützenvorrichtung (8) zwischen den Handgriffen (5) und einem Sitz (7) des Motorrades vorgesehen ist, und der wassergekühlte Motor (6) hinter der Tief - Hoch- Fußstützenvorrichtung (8) montiert ist, der Kühler (20) zwischen dem Fußbrett (14) der Fußstützenvorrichtung (8) und dem wassergekühlten Motor (6), insbesondere hinter einer Unterseite des Fußbrettes (14) der Tief - Hoch- Fußstützenvorrichtung (8) angeordnet ist.

3. Motorrad vom Roller- Typ nach Anspruch 1 oder 2, **dadurch gekennzeichnet, dass** die linke und die rechte Seitenwand der Unterabdeckung (22) jeweils mit einer LuftEinführungsöffnung (22d) versehen sind.

4. Motorrad vom Roller- Typ nach zumindest einem der Ansprüche 1 bis 3, **dadurch gekennzeichnet, dass** das Motorrad aufweist einen Fahrzeugrahmen (2) mit einem aufsteigenden Abschnitt (12c, 13c), der von der Fußstützenvorrichtung (8) nach aufwärts und rückwärts geneigt ist und der Kühler (20) hinter dem aufsteigenden Abschnitt (12c, 13c) des Fahrzeugrahmens (2) und entlang eines Neigungswinkels des aufsteigenden Abschnittes (12c, 13c) angeordnet ist.

5. Motorrad vom Roller- Typ nach Anspruch 4, **dadurch gekennzeichnet, dass** der Fahrzeugrahmen (2) aufweist einen Hauptrahmen (12) mit großem Durchmesser und einen Unterrahmen (13) mit einem kleinen Durchmesser und der aufsteigende Abschnitt des Rahmens (2) einen aufsteigenden Abschnitt (12c) des Rahmens (12) mit großem Durchmesser und einen aufsteigenden Abschnitt (13c) des Unterrahmens (13) mit kleinem Durchmesser aufweist und der Kühler (20) an den aufsteigenden Abschnitten (12c, 13c) montiert ist.

6. Motorrad vom Roller- Typ nach zumindest einem der Ansprüche 1 bis 5, **dadurch gekennzeichnet, dass** der Kühler (20) in einer Form länglich in einer Richtung der Breite des Fahrzeuges hergestellt ist.

7. Motorrad vom Roller- Typ nach zumindest einem Ansprüche 1 bis 6, **dadurch gekennzeichnet, dass** der Kühler (20) in einem U- Strömungs- Typ hergestellt ist, in dem Wasser, das von einer Seite in einer Richtung der Breite des Motorrades einfließt, auf die andere Seite zurückgeführt wird; und aus der anderen Seite herausfließt; ein Luftfilter (15) in einer Position angeordnet ist, die auf einer Seite des Motors (6) in der Richtung der Breite des Motorrades ist und die hinter dem anderen Seitenteil des Kühlers (20) ist.

8. Motorrad vom Roller- Typ nach Anspruch 7, **dadurch gekennzeichnet, dass** der Luftfilter (15) vorgesehen ist, eine Ansaugöffnung (15e) aufweist und eine Luftführungseinrichtung (15c), um die Einleitung von Warmluft nach dem Passieren des Kühlers (20) in die Ansaugöffnung (15e) des Luftfilters (15), zu verbinden.

9. Motorrad vom Roller- Typ nach zumindest einem der Ansprüche 1 bis 8, **dadurch gekennzeichnet, dass** eine Kühlwasserpumpe (18) auf einer Seite des Motors (6) in Richtung der Breite des Motorrades angeordnet ist, die Kühlwasserpumpe (18) und ein Wassermanteleinlass (6f) des Motors (6) durch einen Wasserzuführungsschlauch (19a) miteinander verbunden sind, ein Wassermantelauslass (6e) und ein Kühlwassereinlass, gebildet auf einer Seite des Kühlers (20), durch einen Wasserkanalschlauch (19b) miteinander verbunden sind, und ein Kühlwasserauslass, gebildet auf einer Seite des Kühlers (20) und die Kühlwasserpumpe (18) durch einen Rückführschlauch (19c) miteinander verbunden sind.

10. Motorrad vom Roller- Typ nach zumindest einem der Ansprüche 1 bis 9, **dadurch gekennzeichnet, dass** eine Luftentlüftungsbohrung (9d) in einer Fahrzeugabdeckung (9) oberhalb des Kühlers (20) vorgesehen ist.

## Revendications

1. Motocyclette de type scooter avec un moteur refroidi à l'eau (6), un dispositif formant repose-pied de faible hauteur (8) ayant une tôle de plancher (14), et un agencement de refroidissement (17) ayant un radiateur (20) pour refroidir l'eau de refroidissement du moteur refroidi à l'eau (6), dans laquelle ledit radiateur (20) est placé sous la tôle de plancher (14) du dispositif formant repose-pied (8), et un recouvrement inférieur (22) entourant un espace sous la tôle de plancher (14) est muni d'un trou d'introduction d'air (22d) pour guider le flux d'air vers le radiateur (20), le flux d'air se produisant lorsque la motocyclette fonctionne, **caractérisée en ce que** ledit trou d'introduction d'air (22d) est agencé dans au moins une des parois latérales du recouvrement inférieur (22).

2. Motocyclette de type scooter selon la revendication 1, **caractérisée en ce que** le dispositif formant repose-pied de faible hauteur (8) est fourni entre le guidon (5) et un siège (7) de la motocyclette, et ledit moteur refroidi à l'eau (6) est monté derrière le dispositif formant repose-pied de faible hauteur (8), ledit radiateur (20) est placé entre la tôle de plancher (14) du dispositif formant repose-pied (8) et ledit moteur refroidi à l'eau (6), particulièrement derrière un côté inférieur de la tôle de plancher (14) du dispositif formant repose-pied de faible hauteur (8).

3. Motocyclette de type scooter selon la revendication 1 ou 2, **caractérisée en ce que** les parois latérales gauche et droite du recouvrement inférieur (22) sont respectivement munies d'un trou d'introduction d'air (22d).

4. Motocyclette de type scooter selon l'une quelconque des revendications 1 à 3, **caractérisée en ce que** ladite motocyclette comporte un châssis de véhicule (2) avec une partie montante (12c, 13c) en pente vers l'arrière à partir du dispositif formant repose-pied (8), et le radiateur (20) est mis en place derrière ladite partie montante (12c, 13c) du châssis de véhicule (2) et le long d'un angle d'inclinaison de ladite partie montante (12c, 13c).

5. Motocyclette de type scooter selon la revendication 4, **caractérisée en ce que** ledit châssis de véhicule (2) comporte un châssis principal de grand diamètre (12) et un châssis auxiliaire de petit diamètre (13), et ladite partie montante du châssis (2) comporte une partie montante (12c) du châssis principal de grand diamètre (12) et une partie montante (13c) du châssis auxiliaire de petit diamètre (13), et ledit radiateur (20) est monté sur lesdites parties montantes (12c, 13c).

6. Motocyclette de type scooter selon l'une quelconque des revendications 1 à 5, **caractérisée en ce que** ledit radiateur (20) est réalisé avec une forme oblongue dans la direction de largeur de la motocyclette.

7. Motocyclette de type scooter selon l'une quelconque des revendications 1 à 6, **caractérisée en ce que** le radiateur (20) est réalisé selon un type à écoulement en U dans lequel l'eau s'écoule à l'intérieur à partir d'un côté dans une direction de largeur de la motocyclette, fait demi-tour sur l'autre côté, et s'écoule à l'extérieur de l'autre côté ; un filtre à air (15) est placé dans une position qui est sur l'autre côté du moteur (6) dans la direction de largeur de la motocyclette, et qui est derrière l'autre partie latérale du radiateur (20).

8. Motocyclette de type scooter selon la revendication 7, **caractérisée en ce que** ledit filtre à air (15) comporte une entrée d'aspiration (15e), et des moyens de guidage d'air (15c) sont fournis pour empêcher l'introduction d'air chaud, après passage par le radiateur (20), dans l'entrée d'aspiration (15e) du filtre à air (15).

9. Motocyclette de type scooter selon l'une quelconque des revendications 1 à 8, **caractérisée en ce qu'**une pompe à eau de refroidissement (18) est mise en place sur un côté du moteur (6) dans la direction de largeur de la motocyclette, la pompe à eau de refroidissement (18) et une entrée de chemise d'eau (6f) du moteur (6) sont interconnectées à travers un flexible d'alimentation en eau (19a), une sortie de chemise d'eau (6e) et une entrée d'eau de refroidissement formée sur un côté du radiateur (20) sont interconnectées à travers un flexible de passage d'eau (19b), et une sortie d'eau de refroidissement formée sur un côté du radiateur (20) et la pompe d'eau de refroidissement (18) sont interconnectées à travers un flexible de retour (19c).

10. Motocyclette de type scooter selon l'une quelconque des revendications 1 à 9, **caractérisée en ce qu'**un trou de mise à l'air libre (9d) est fourni dans un recouvrement de véhicule (9) au-dessus du radiateur (20).
